# EUROPEAN PATENT APPLICATION

(11) **EP 2 639 565 A1**
(43) Date of publication of application: **18.09.2013**
(21) Application number: 12159381.8
(22) Date of filing: 14.03.2012
(51) Int. Cl.: G01L 9/00, G01L 11/00, G01L 19/00, E21B 47/06, G01M 3/00

(54) **Method and device for determining pressure in a cavity**

(71) Applicant: Sustained AS, 4065 Stavanger (NO)
(72) Inventor: Freyer, Rune, 4046 Hafrsfjord (NO)
(74) Representative: Håmsø Patentbyrå ANS

(57) **Abstract**

Method and device for determining pressure in a cavity (2) by use of a pressure sensing apparatus (8) where the method includes:
- providing an elongate first tubular (24) that is closed or communicates with a closed first chamber (32) at a first end portion (30);
- connecting the elongate first tubular at a second end portion (40) to the fluid pressure of the cavity (2);
- providing a movable first body (18) in the elongate first tubular (24) at an interface between a first fluid (52) that is present at the first end portion (30) of the elongate first tubular (24), and a second fluid (54) that is in pressure communication with the cavity (2) wherein the method includes:
- providing a first pressure reference member (56);
-measuring the distance (L) between the first pressure reference member (56) and the first body (18); and
- providing a relationship between the distance (L) measured between the first pressure reference member (56) and the first body (18), and the pressure present in the cavity (2).

## Description

There is provided a method for determining pressure in a cavity. More precisely there is provided a method for determining pressure in a cavity by use of a pressure sensing apparatus where the method includes:
- providing an elongate first tubular that is closed or communicates with a closed first chamber at a first end portion;
- connecting a second end portion of the elongate first tubular to the fluid pressure of the cavity;
- providing a movable first body in the elongate first tubular at an interface between a first fluid that is present in the first end portion of the elongate first tubular, and a second fluid that is in pressure communication with the cavity. The invention also includes an apparatus for performing the method.

Annulus pressure is a large and unresolved well integrity challenge in the petroleum industry. The measurement of such pressure is also a challenge, especially in cemented wellbore sections in the reservoir; in intermediate casing strings or in isolated wellbore volumes. Cement integrity logging, often termed Cement Bond Logs or CBL, does not provide reliable results because it is based on indirect indications of seismic interphases, not on actual pressure sealing capability. Leaks may develop with the primary cement job; or more frequently leaks develop over time after pressure cycling well tubulars and cement. Monitoring of pressure in formations adjacent to a wellbore may be advantageous, both through the reservoir and in the overburden.

A sensor may be desired to be positioned in the cemented intervals to communicate well integrity and cement status. In a sensor system to measure pressure communication there should preferably be no modifications required for the casing because any such modification will be a reliability challenge and internal restrictions should not be present on the inside of the casing.

The system should be self contained and should not rely on external or internal power supply. It will be advantageous to have a system that can measure through the pipe walls of a number of concentric casings and a production tubing so that all the casings can be monitored from the inside of the production tubing.

US 3974690 disclose a system including a tool where a pressure is measured in an annular space by means of a piston working against a gas filled chamber. A reference for the position of the piston is taken from the inside tubular where a measuring tool is landed on a shoulder. A shoulder for setting down a measurement tool may not be obtainable if the internal pipe can move relative to the outer pipe because of relative axial movement of the pipes. Shoulders may not be desired of other reasons; such as causing an inner diameter restriction in the wellbore. A reliable reference distance between the shoulder and the tool is therefore not obtainable.

The purpose of the invention is to overcome or reduce at least one of the disadvantages of the prior art.

The purpose is achieved according to the invention by the features as disclosed in the description below and in the following patent claims.

According to a first aspect of the invention there is provided a method for determining pressure in a cavity by use of a pressure sensing apparatus and where the method includes:
- providing an elongate first tubular that is closed or communicates with a closed first chamber at a first end portion;
- connecting a second end portion of the elongate first tubular to the fluid pressure of the cavity;
- providing a movable first body in the elongate first tubular at an interface between a first fluid that is present in the first end portion of the elongate first tubular, and a second fluid that is in pressure communication with the cavity wherein the method includes:
- providing a contactless first pressure reference member;
- measuring the distance between the first pressure reference member and the first body; and
- providing a relationship between the distance measured between the first pressure reference member and the first body, and the pressure present in the cavity.

It will be understood that the pressure measuring apparatus will be functional even when the elongate first tubular is closed at the first end portion of the pressure sensing apparatus. However, the pressure increase in the first fluid will severely reduce the travelling distance of the first body towards the first end portion. It is thus an advantage to let the elongate first body communicate with the first chamber at the first end portion.

The position of the first pressure reference member relative to the pressure sensing apparatus is known and the first pressure reference member may be connected to the first end portion.

The method may further include the steps of:
- including a pressure measurement member at the first body; and
- measuring the relative distance between the first pressure reference member and the pressure measurement member by use of a sensing tool.

Where knowledge of the temperature in the cavity is required in order to improve the accuracy of the pressure measurement, the method may further include the steps of:
- providing a temperature sensing apparatus that is thermally connected with the cavity and includes an elongate second tubular where the elongate second tubular is closed or communicates with a closed third camber and fourth chamber at respective end parties;
- providing a movable second body in the elongate second tubular at the interface between a third fluid and a fourth fluid where the fourth fluid has a coefficient of expansion that is different from a material containing the fourth fluid, and where the fourth fluid expands against the third fluid that is a gas;
- providing a first temperature reference member at the temperature sensing apparatus;
- measuring the distance between the first temperature reference member and the second body;
- providing a relationship between the distance measured between the first temperature reference member and the second body, and the temperature of the cavity; and
- providing a relationship between the distance measured between the first pressure reference member and the first body, the temperature and the pressure present in the cavity.

The first temperature reference member may be contact less.

As explained above in relation to the pressure sensing apparatus, the travelling length of the second body in the elongate second tubular may be increased by connecting the elongate second tubular to the third and fourth chamber at the first end portion and the second end portion respectively.

The fourth fluid must have a coefficient of expansion that is different from that of the material containing the fourth fluid in order to make the second body move in the elongate second tubular when a temperature change is experienced. Normally the fourth fluid is chosen to have larger coefficient of expansion than the material containing the fourth fluid in order to move the second body towards the first end portion when the temperature increases.

The material that encloses the fourth fluid is, depending on the actual design, the material of the elongate second tubular and/or that of the fourth chamber.

The position of the radiating first temperature reference member relative the temperature sensing apparatus is known.

The method may further include:
- including a temperature measurement member in the second body; and
- measuring the relative distance between the first temperature reference member and the temperature measurement member by use of the sensing tool.

It should be noted that the terms "first end portion" and "second end portion" refers both to the pressure sensing apparatus and the elongate first tubular as well as to the temperature sensing apparatus and the elongate second tubular.

The relationship between the measured distance between the first pressure reference member and the first body and the pressure at a certain temperature is dependent on several factors. It is dependent on among other features, the physical properties of the actual materials and fluids used as well as the volume of the first chamber. Likewise, the relation between distance and temperature in the temperature sensing apparatus depends on the same or equivalent properties. These relationships are well known to a skilled person.

The relationships between these features may be determined theoretically or experimentally or as a combination thereof.

According to a second aspect of the invention there is provided an apparatus for determining pressure in a cavity where the pressure sensing apparatus includes an elongate first tubular where the elongate first tubular is closed or communicates with a closed first chamber at a first end portion, and is connected to the cavity at its other end portion, and where a movable first body with a readable pressure measurement member is positioned in the elongate first tubular at an interface between a first fluid that is present in the first end portion of the elongate first tubular, and a second fluid that is pressure-wise communicating with the cavity and where a contact less first pressure reference member is provided.

The first body may be provided with a pressure measurement member.

Where knowledge of the temperature in the cavity is required in order to improve the pressure measurement accuracy a temperature sensing apparatus may be included that comprises an elongate second tubular that is closed or communicates with a closed third chamber at a first end portion and a fourth chamber at a second end portion. The temperature sensing apparatus is thermally connected with the cavity, and a first temperature reference member is present at a known position relative the temperature sensing apparatus, and where a readable movable second body is present in the elongate second tubular at an interface between a third fluid and a fourth fluid, and where the fourth fluid has a coefficient of expansion that is different from that of the enclosure of the fourth fluid.

A temperature measurement member may be provided in the second body.

If the elongate first tubular, at its second end portion, is open, is may be provided with a membrane or membrane like barrier in order to avoid influx of for instance grouting material.

The second chamber may be closed against wellbore fluid by a flexible pipe, for instance a silicone tube that is filled with a second fluid. The pressure in the cavity is transferred to the first body via the elastic pipe and the second fluid while keeping contaminations out of the elongate first tubular.

It has been found that nitrogen is suitable as a first and third fluid while silicon oil is suitable for the second and fourth fluid.

The radiating sources may be chosen from a group that includes among others Co60 and Cs137.

As Radio-frequency identification (RFID) technology improves, such items, which may be exited by a sender in a reading tool, may become useful as a radiating element also in steel environments like this.

The pressure measurement member, the first pressure reference member, the temperature measurement member, the first temperature reference member and the second temperature reference member may thus be chosen from a group including at least Co60, Cs137, a radio-frequency identification device and a magnetic readable member. The magnetic readable member may be in the form of collar such as a casing collar.

The accuracy of the sensing tool, that may be a spectral gamma ray logging tool, a RFID logging tool a magnetic reading tool or combinations thereof, may be in the range of say 10 cm. At an elongate first tubular length of 12 m the measurement uncertainty will be 0.8%, while at a length of 3 m the uncertainty will be 3.3%. Greater length of the first and second tubulars thus enhances the accuracy of the measurements.

In principle the pressure sensing apparatus may be circular and positioned in the cavity and at least partly surrounding a pipe. The measured values will then be an angular difference between the reference and the body. It is however envisaged that insufficient accuracy of the readings through the steel pipes will be a problem due to the short distances between the radiating elements.

The pressure sensing tool may have a second pressure reference member at a distance from the first pressure reference member. Likewise, the temperature sensing tool may have a second temperature reference member at a distance from the first temperature reference member. The second reference members may be positioned on the sensing tools themselves or at a known distance from them.

By moving the sensing tool further until it senses the second pressure reference member, the actual distance between the pressure reference members may be compared to check that they still remain in the correct position relative to the pressure measurement apparatus. The same applies to the temperature sensing tool.

The elongate first tubular may at least partly be made from a brittle material such as glass. The elongate first tubular is thus sensitive to fractures in the grouting. By having a relatively low pressure in the elongate first tubular, the first body would, as wellbore fluid is released into the elongate first tubular, rush to one of the end positions if the elongate first tubular is cracked. This abnormal situation is easily detected by the radiation sensing tool.

The knowledge of grouting integrity is of great value and the method would identify whether hydraulic stimulation operations fractures the grouting. It is also possible to identify whether faults in pressure isolation of the cavity is due to fractures in the grouting or to annulus flow.

The elongate first tubular may at least partly be made form a soluble material such as aluminium. If the aluminium is dissolved, the port of entry will release wellbore fluid into the elongate first tubular. The first body will then move in the elongate first tubular as explained above.

Even though the pressure sensing tool is shown in the cavity outside the outer casing pipe, the tool may just as well be used in an intermediate cavity or a more distant cavity.

In some cases the tool may also be useful in a cavity that is open to the sensing tool.

The invention is suitable for determining the pressure in a cavity. The pressure measurements may be done in failed grouting, when grouting was placed, for determining maximum pressure, measurements in isolated sections of a reservoir or in closed compartment. The accuracy may be increased by also determining the temperature at the point of measurement.

The measurements may be undertaken without disturbing the integrity of the cavity and where the position of the pressure sensing tool is unknown relative a reachable fixed point.

Below, an example of a preferred method and device is explained under reference to the enclosed drawings, where:

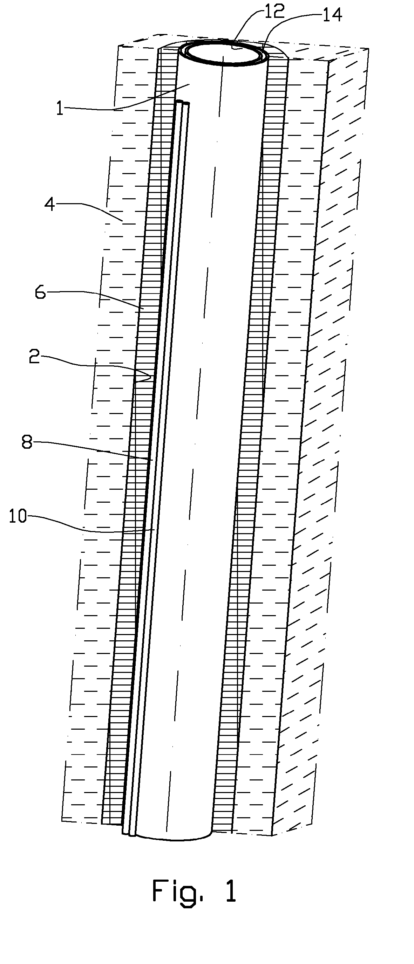

- Fig. 1: shows in a perspective view a casing that is positioned in a cavity and where a pressure sensing apparatus according to the invention is provided at the cavity;
- Fig. 2: shows in a perspective view and to a greater scale a detail of the casing and apparatus in fig. 1;
- Fig. 3: shows a longitudinal section of an apparatus for pressure sensing;
- Fig. 4: shows a longitudinal section of an apparatus for temperature sensing;
- Fig. 5: shows an exemplary graph of the relationship between the position of a first body in the pressure sensing apparatus, the temperature and the pressure in the cavity; and
- Fig. 6: shows s an exemplary graph of the relationship between the position of a second body in the temperature sensing apparatus and the temperature in the cavity.
- Fig. 7: shows the pressure sensing apparatus in an alternative embodiment.

On the drawings the reference number 1 denotes an outer casing pipe that is positioned in a cavity 2 in the ground 4. The cavity 2 is filled with set grouting 6.

A pressure sensing apparatus 8 and a temperature sensing apparatus 10 are present in the cavity 2. An inner casing pipe 12 is positioned inside the outer casing 1. An annulus 14 is formed between the outer casing 1 and the inner casing 12. The annulus 14 is at least partly filled with grouting not shown.

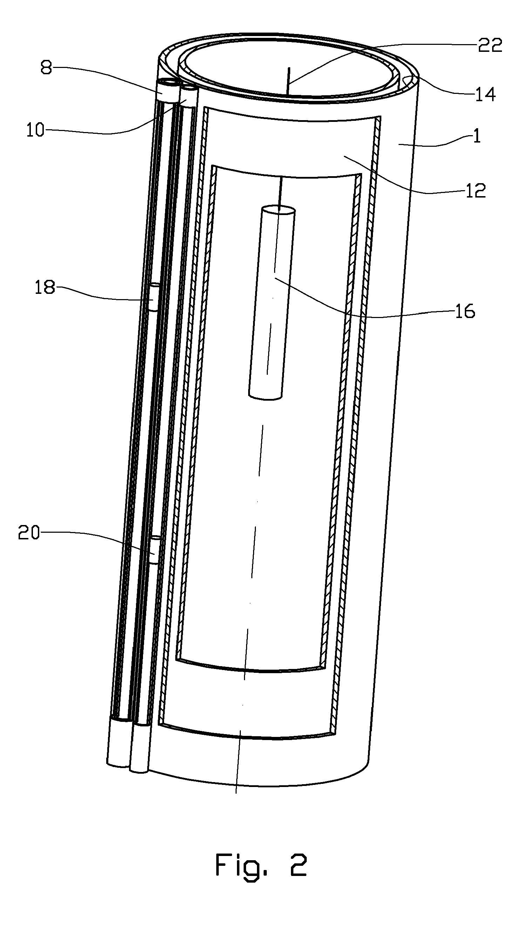

In fig. 2 a sensing tool 16 is movably positioned inside the inner casing 12. The sensing tool 16 is designed to at least be able to differentiate between different radiation, for instance from a radiating, movable, first body 18 in the pressure sensing apparatus 8 and a radiating, movable, second body 20 in the temperature sensing apparatus 10. The sensing tool 16 communicates with the surface, not shown, via a cable 22.

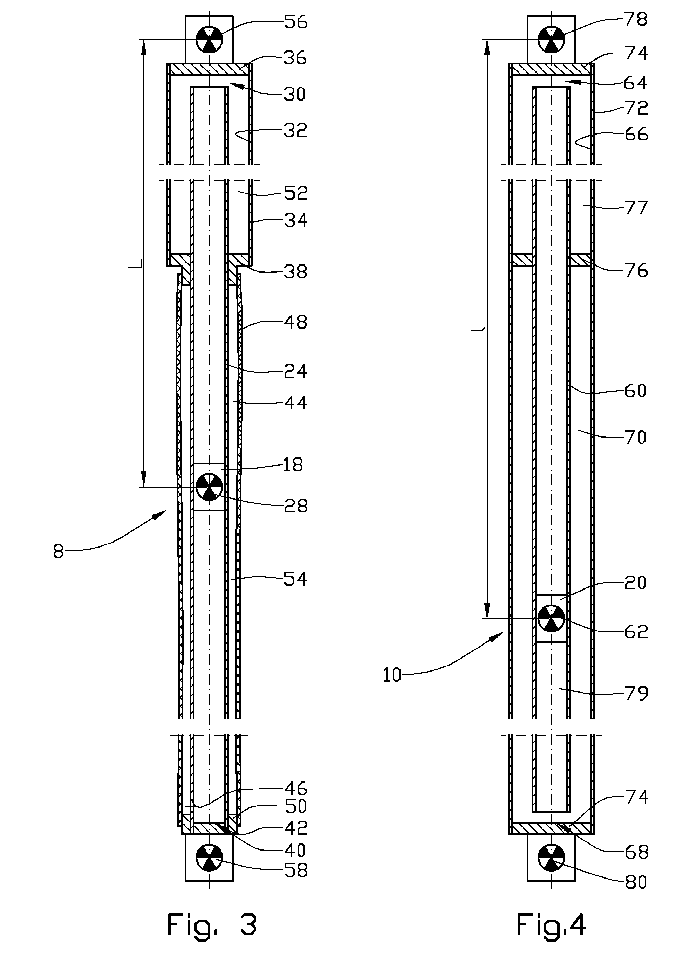

Fig. 3 shows a preferred embodiment of the pressure sensing apparatus 8. The pressure sensing apparatus 8 comprises an elongate first tubular 24 where the first body 18 is movable inside. The movable first body 18 may be floating or have a seal, not shown, against the first tubular 24. The first body 18 have a readable, radiating pressure measurement member 28, here in the form of a nuclear Co60 source.

At a first end portion 30 of the pressure sensing apparatus 8 the elongate first tubular 24 communicates with a closed first chamber 32 that is made up of a first chamber tube 34 having an end closure 36 and an annulus closure 38. Apart from changes due to temperature expansion and compression due to pressure, the volume of the first closed chamber 32 is fixed.

At a second end portion 40 of the pressure sensing apparatus 8 the elongate first tubular 24 is closed by an end closure 42 and communicates with a second chamber 44 through an opening 46 in the elongate first tubular 24. The second chamber 44 is made up of a flexible pipe 48 that in this preferred embodiment extends outside along the elongate first tubular 24 between the annulus closure 38 and a pipe closure 50. The volume of the second chamber 44 is variable.

The first chamber 32 and the elongate first tubular 24 between the first body 18 and the first chamber 32 are filled with a compressible fluid 52, here in the form of nitrogen that may be pressurized.

The second chamber 44 and the elongate first tubular 24 between the first body 18 and the second chamber 44 are filled with a second fluid 54, here in the form of silicon oil.

A radiating first pressure reference member 56 is positioned at the first end portion 30 of the pressure sensing apparatus 8 and a radiating second pressure reference member 58 is positioned at a distance from the first pressure reference member 56 at the second end portion 40 of the pressure sensing apparatus 8. Both pressure reference members 56, 58 are here made from Co 60.

The pressure of the cavity 2 is acting on the second fluid 54 through the flexible pipe 48. As pressure in the cavity 2 rises, more of the second fluid 54 is flowing from the second chamber 44 through the opening 46 and into the elongate first tubular 24 while compressing the first fluid 52. The first body 18 that is present at the interface between the first and second fluids 52, 54 is moved along the elongate first tubular 48.

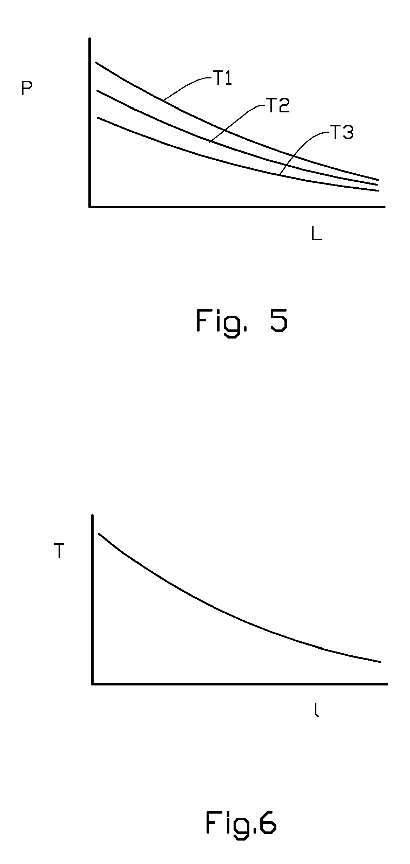

An exemplary graph showing the relationship between the position of the first body 18 in the elongate first tubular 24 is shown in fig. 5 where the distance L between the first pressure reference member 56 and the first body 18 is set out along the abscissa and where the corresponding pressure P in the cavity 2 is shown on the ordinate. Different graphs related to different temperatures T1, T2 and T3 are shown.

Fig. 4 shows a preferred embodiment of the temperature sensing apparatus 10. The temperature sensing apparatus 10 comprises an elongate second tubular 60 where the second body 20 is movable inside. The movable second body 20 may be floating or have a seal, not shown, against the second tubular 60. The second body 20 has a readable, radiating temperature measurement member 62, here in the form of a nuclear Cs137 source.

At a first end portion 64 of the temperature sensing apparatus 10 the elongate second tubular 60 communicates with a closed third chamber 66. At a second end portion 68 of the temperature sensing apparatus 10 the elongate second tubular 60 communicates with a fourth chamber 70. The third and fourth chambers 66, 70 are made up of a second chamber pipe 72 that extends outside along the elongate second tubular 60 that is closed off by end closures 74. An annulus closure 76 separates the third a fourth chambers 66, 70. Apart from temperature expansion and compression due to pressure, the volumes of the third and fourth chambers 66, 70 are fixed.

The third chamber 66 and the elongate second body 60 between the second body 20 and the third chamber 66 are filled with a compressible third fluid 77, here in the form of nitrogen that may be pressurized.

The fourth chamber 70 and the elongate second tubular 60 between the second body 20 and the fourth chamber 70 are filled with a fourth fluid 79, here in the form of silicon oil. The items 72, 74 and 76 constitute an enclosure of the fourth fluid 79.

A radiating first temperature reference member 78 and a radiating second temperature reference member 80 are positioned at the first end portion 64 and the second end portion respectively of the temperature sensing apparatus 10. Both temperature reference member 78, 80 are here made from Co 60 and may, as here, be the same as the pressure reference members 56, 68.

As temperature in the cavity 2 increases, if the fourth fluid 79 has a larger thermal expansion coefficient than the material of the second chamber pipe 72, the second body 20 is moved towards the third chamber 72 while compressing the third fluid 77.

An exemplary graph showing the relationship between the position of the second body 20 in the elongate second tubular 60 is shown in fig. 6 where the distance I between the first temperature reference member 78 and the second body 20 is set out along the abscissa and where the corresponding temperature T in the cavity 2 is shown on the ordinate.

When the pressure in the cavity 2 is to be determined, the radiation sensing tool 16 is moved into the inner casing pipe 12 or any other conduit, not shown, adjacent to the cavity 2.

As the radiation from the first pressure reference member 56 and the first temperature reference member 78, here the same member, the position of the sensing tool 16 is noted. The sensing tool 16 is moved further and senses the radiation from the pressure measurement member 28 positioned in the first body 18, or the radiation from the temperature measurement member 62 present in the second body 20, first and the other thereafter. As the members 28, 62 are different, the sensing tool 16 distinguishes between them and the distance L respective I may be determined.

By looking into the graph in fig. 6 the temperature T, that may be equal to T1, T2 or T3, in the cavity 2 corresponding to the distance I is identified.

The pressure P in the cavity corresponding to the actual distance L and the correct temperature T1, T2 or T3, may read from the graph in fig. 5.

By moving the sensing tool 16 further until it senses the radiation from the second pressure reference member 58, the actual distance between the pressure reference members 56, 58 may be compared to check that they still remain in the correct position relative to the pressure measurement apparatus 8.

In an alternative embodiment the first pressure reference member 56 is in the form of a pipe collar 82 that is detectable from the sensing tool 16. The pressure measurement member 28 at the first body 18 in the pressure sensing apparatus 8 is a radiating member that is also readable by the sensing tool 16.

## Claims

1. Method for determining pressure in a cavity (2) by use of a pressure sensing apparatus (8) where the method includes:
- providing an elongate first tubular (24) that is closed or communicates with a closed first chamber (32) at a first end portion (30);
- connecting the elongate first tubular to the fluid pressure of the cavity (2) at a second end portion (40);
- providing a movable first body (18) in the elongate first tubular (24) at an interface between a first fluid (52) that is present at the first end portion (30) of the elongate first tubular (24), and a second fluid (54) that is in pressure communication with the cavity (2), **characterized in that** the method includes:
- providing a first pressure reference member (56);
- measuring the distance (L) between the first pressure reference member (56) and the first body (18); and
- providing a relationship between the distance (L) measured between the first pressure reference member (56) and the first body (18), and the pressure present in the cavity (2).

2. Method in accordance with claim 1, **characterized in that** the method further includes:
- including a pressure measurement member (28) at the first body (18); and
- measuring the relative distance (L) between the first pressure reference member (56) and the pressure measurement member (28) by use of a sensing tool (16).

3. Method in accordance with claim 1 where knowledge of the temperature in the cavity (2) is required in order to improve the accuracy of the pressure measurement, **characterized in that** the method further includes:
- providing a temperature sensing apparatus (10) that is thermally connected with the cavity (2) and includes an elongate second tubular (60) where the elongate second tubular (60) is closed or communicates with a closed third chamber (66) and fourth chamber (70) at respective end portions (64, 68);
- providing a movable second body (20) in the elongate second tubular (60) at the interface between a third fluid (77) and a fourth fluid (79) where the fourth fluid (79) has a coefficient of expansion that is unlike a material containing the fourth fluid (79) and where the fourth fluid (79) expands against the third fluid (77) that is a gas;
- providing a contact less first temperature reference member (78);
- measuring the distance (I) between the first temperature reference member (78) and the second body (20);
- providing a relationship between the distance (I) measured between the first temperature reference member (78) and the second body (20), and the temperature of the cavity (2); and
- providing a relationship between the distance (L) measured between the first pressure reference member (56) and the first body (18), the temperature (T) and the pressure (P) present in the cavity (2).

4. Method in accordance with claim 1, **characterized in that** the method further includes:
- including a temperature measurement member (62) in the second body (20); and
- measuring the relative distance (I) between the first temperature reference member (78) and the temperature measurement member (62) by use of the sensing tool (16).

5. Apparatus for determining pressure in a cavity where the apparatus (8) includes an elongate first tubular (24) where the elongate first tubular (24) is closed or communicates with a closed first chamber (32) at a first end portion (30), and is connected to the cavity (2) at its second end portion (40), and where a movable first body (18) with a readable pressure measurement member (28) is positioned in the elongate first tubular (24) at an interface between a first fluid (52) that is present in the first end portion (30) of the elongate first tubular (24), and a second fluid (54) that is pressure-wise communicating with the cavity (2); **characterized in that** a contact less first pressure reference member (56) is provided.

6. Apparatus in accordance with claim 5, **characterized in that** the first body (18) is provided with a pressure measurement member (28).

7. Apparatus in accordance with claim 5 where knowledge of the temperature in the cavity (2) is required in order to improve the pressure measurement accuracy, **characterized in that** a temperature sensing apparatus (10) that includes an elongate second tubular (60) that is closed or communicates with a closed third chamber (66) at a first end portion (64) and a fourth chamber (70) at a second end portion (68), is thermally connected with the cavity (2), and where a first temperature reference member (78) is present at a known position relative the temperature sensing apparatus (10), and where a readable movable second body (20) is present in the elongate second tubular (60) at an interface between a third fluid (77) and a fourth fluid (79), and where the fourth fluid (79) has a coefficient of expansion that is different from that of an enclosure of the fourth fluid.

8. Apparatus in accordance with claim 7, **characterized in that** a temperature measurement member (62) is provided in the second body (20).

9. Apparatus in accordance with claim 5, **characterized in that** a second chamber (44) is closed against wellbore fluid by a flexible pipe (48).

10. Apparatus in accordance with claim 5, **characterized in that** the pressure sensing tool (8) is circular and surrounding at least a portion of a pipe.

11. Apparatus in accordance with claim 5, **characterized in that** a second pressure reference member (58) is provided at a distance from the first pressure reference member (56).

12. Apparatus in accordance with claim 7, **characterized in that** a second temperature reference member (80) is provided at a distance from the first temperature reference member (78).

13. Apparatus in accordance with claim 5, **characterized in that** the elongate first tubular (24) at least partly is made from a brittle material.

14. Apparatus in accordance with claim 5, **characterized in that** the elongate first tubular (24) at least partly is made from a soluble material.

15. Apparatus in accordance with claim 5, **characterized in that** the elongate first tubular (24) at its second end portion (40), if open, is provided with a membrane or membrane like barrier (84).

16. Apparatus in accordance with the preceding claims, **characterized in that** the pressure measurement member (28), the first pressure reference member (58), the temperature measurement member (62) the first temperature reference member (78) and the second temperature reference member (80) are chosen from a group including at least Co60, Cs137, a radio-frequency identification device and a magnetic readable member.
